# EUROPÄISCHE PATENTANMELDUNG

(11) **EP 4 647 239 A2**
(43) Veröffentlichungstag der Anmeldung: **12.11.2025**
(21) Anmeldenummer: 25175131.9
(22) Anmeldetag: 08.05.2025
(51) Int. Cl.: B29C 55/02

(54) **LUFTVERSORGUNGSSYSTEM FÜR EINE FOLIENRECKANLAGE**

(30) Priorität: 10.05.2024 DE 102024113147
(71) Anmelder: Brückner Maschinenbau GmbH, 83313 Siegsdorf (DE)
(72) Erfinder: HÄUSL, Tobias, 83278 Traunstein (DE); STENGEL, Elena, 83313 Siegsdorf (DE)
(74) Vertreter: Flach Bauer & Partner Patentanwälte mbB

(57) **Zusammenfassung**

Die vorliegende Erfindung betrifft ein Luftversorgungssystem 2 für eine Reckanlage 1. Das Luftversorgungssystem 2 umfasst zumindest eine Luftversorgungseinheit 100, zumindest eine Frischluftversorgungseinheit 102 und zumindest eine Abluftrückführeinheit. Die Abluftrückführeinheit 106 und die Frischluftversorgungseinheit 102 sind einer gemeinsamen ersten Behandlungszone 26c zugeordnet, wobei die Frischluftversorgungseinheit 102 dazu eingerichtet ist, der ersten Behandlungszone Frischluft 300 als Zuluft 310 zuzuführen. Die Abluftrückführeinheit 106 ist dazu eingerichtet, Abluft 200 aus der ersten Behandlungszone 26c abzuführen und jedenfalls einen Teil 210, 212 der Abluft 200 zumindest einer Luftversorgungseinheit 100 zuzuführen. Die Luftversorgungseinheit 100 ist einer zweiten Behandlungszone zugeordnet, welche der ersten Behandlungszone 26c vorgelagert ist. Die Luftversorgungseinheit 100 ist dazu eingerichtet, den ihr von der Abluftrückführeinheit 106 zugeführten Teil 210, 211 der Abluft an die zweite Behandlungszone 26a, 26b als Zuluft 310 bereitzustellen.

## Beschreibung

### Gebiet der Erfindung

Die Erfindung betrifft ein Luftversorgungssystem für eine Folienreckanlage sowie eine Folienreckanlage mit einem Luftversorgungssystem.

### Hintergrund

Reckanlagen finden insbesondere bei der Kunststofffolienherstellung Anwendung. Bekannt sind sogenannte Simultan-Reckanlagen, in welchen eine Kunststofffolie gleichzeitig in Quer- und Längsrichtung gereckt werden kann. Ebenso bekannt sind sogenannte sequenzielle Reckanlagen, bei denen die Kunststofffolie in zwei aufeinanderfolgenden Stufen gereckt wird, beispielsweise zunächst in Längsrichtung und dann in Querrichtung (oder umgekehrt). Schließlich sind auch reine Längsreck- sowie reine Querreckanlagen bekannt.

In typischen Reckanlagen wird die zu reckende Materialbahn (beispielsweise eine Kunststofffolie) an sich gegenüberliegenden Rändern mittels sogenannter Kluppen erfasst. Die Kluppen sind auf umlaufenden Führungsschienen verfahrbar angeordnet, wobei die Materialbahn zwischen zwei Führungsschienen geführt wird.

Die Kluppen, und somit die erfasste Materialbahn, werden dabei nacheinander von einer Einlaufzone (in welcher der Rand der zu reckenden Materialbahn erfasst wird) über eine optionale Vorheizzone (in der die Materialbahn temperiert wird) und eine Reckzone (in der die gegenüberliegenden Kluppen auf Führungsschienenabschnitten mit einer Querkomponente divergierend zur Transportrichtung voneinander wegbewegt werden) zu einer Auslaufzone bewegt. Anschließend können die Kluppen von der Materialbahn gelöst und zurück zur Einlaufzone bewegt werden.

Der Reckzone kann zumindest eine sogenannte Behandlungszone nachgelagert sein. Typischerweise schließt sich der Reckzone zumindest eine sogenannte Annealingzone an, in der die bereits gereckte Materialbahn einer Wärmebehandlung unterzogen werden kann. Die Wärmebehandlung dient insbesondere dazu Spannungen in der Materialbahn, die durch das Recken entstanden sind abzubauen. Nach der zumindest einen Annealingzone können sich eine oder mehrere Kühlzonen anschließen. Weitere Behandlungszonen sind ebenfalls möglich.

Die Kunststofffolie muss vor, während und/oder nach dem eigentlichen Reckvorgang gezielt temperiert (gewärmt oder gekühlt) werden. Hierzu sind die einzelnen Zonen (d.h. die Reckzone und etwaige Behandlungszonen) temperierbar.

Zudem sind die Zonen typischerweise mit einem Luftversorgungssystem gekoppelt, welches es ermöglicht in den Innenraum der jeweiligen Zone Zuluft zuzuführen und verschmutzte bzw. kontaminierte Luft (Abluft) abzuführen. Dies ist nötig, da aus der noch nicht vollständig erkalteten Kunststofffolie Schadstoffe wie Monomere, Oligomere, Hilfsstoffe, Zusatzstoffe (wie Weichmacher, ...) und/oder dergleichen entweichen und sich in der jeweiligen Zone anreichern, oder absetzen und so zu einer Verschmutzung der Anlagenkomponenten und/oder zu einer Beeinträchtigung der Folienqualität führen.

Die Belüftung der Zonen ist jedoch sehr energieintensiv, da die Zuluft, insbesondere, wenn sie aus der Umwelt entnommen wird, in der Regel vorgewärmt werden muss. Aus EP 3 650 199 B1 ist beispielsweise eine Folienreckanlage mit einem Belüftungssystem bekannt, welches sich durch einen geringeren Energiebedarf auszeichnet. Allerdings ist dieses Belüftungssystem sehr komplex und der Regelungsaufwand der einzelnen Luftströme sehr hoch.

### Beschreibung der Erfindung

Die vorliegende Erfindung stellt sich mithin die Aufgabe ein Luftversorgungssystem für eine Reckanlage sowie eine Reckanlage mit einem Luftversorgungssystem bereitzustellen, welches die folgenden Nachteile zumindest teilweise überwindet.

Diese Aufgabe wird erfindungsgemäß durch ein Luftversorgungssystem sowie eine Reckanlage gemäß den unabhängigen Ansprüchen gelöst. Weitere Aspekte der Erfindung sind in den abhängigen Ansprüchen, sowie in der nachfolgenden Beschreibung aufgeführt.

Insbesondere wird die Aufgabe durch ein Luftversorgungssystem für eine Reckanlage, insbesondere eine Folienreckanlage gelöst. Das Luftversorgungssystem umfasst zumindest eine Luftversorgungseinheit, zumindest eine Frischluftversorgungseinheit und zumindest eine Abluftrückführeinheit.

Die Abluftrückführeinheit und die Frischluftversorgungseinheit sind einer gemeinsamen ersten Behandlungszone zugeordnet.

Die Frischluftversorgungseinheit ist dazu eingerichtet, dieser ersten Behandlungszone Frischluft als Zuluft zuzuführen. Der Begriff "Frischluft" bezeichnet dabei einen Luftstrom der erstmals einer Behandlungszone als Zuluft zugeführt wird. Im einfachsten Fall wird die Frischluft der Umgebung entnommen. Ebenso ist es möglich, Prozessgase als Frischluft bereitzustellen, und/oder diese mit der Umgebungsluft zu mischen.

Die Abluftrückführeinheit ist dazu eingerichtet, Abluft aus dieser ersten Behandlungszone abzuführen. Mittels der Abluftrückführeinheit und der Frischluftversorgungseinheit können der ersten Behandlungszone also Frischluft zugeführt und zugleich Abluft entnommen werden.

Weiterhin ist die Abluftrückführeinheit dazu eingerichtet jedenfalls einen Teil der Abluft einer Luftversorgungseinheit zuzuführen. Ein weiterer Teil der Abluft kann einer weiteren Luftversorgungseinheit zugeführt werden und/oder (an die Umwelt) abgeführt werden. Bevor Abluft in die Umwelt abgegeben wird, kann diese gefiltert werden, sodass sie im Wesentlichen frei von Schadstoffen ist.

Die Luftversorgungseinheit ist einer zweiten Behandlungszone zugeordnet. Diese zweite Behandlungszone ist der ersten Behandlungszone vorgelagert.

Sie kann unmittelbar benachbart zur ersten Behandlungszone angeordnet sein, oder es können weitere Zonen, wie beispielsweise eine Neutralzone oder eine weitere Behandlungszone, zwischen der ersten und der zweiten Behandlungszone angeordnet sein. Die Luftversorgungseinheit ist dazu eingerichtet, den ihr von der Abluftrückführeinheit zugeführten Teil der Abluft an die zweite Behandlungszone als Zuluft bereitzustellen.

Im Falle einer Reckanlage kann die Zuluft oberhalb und/oder unterhalb einer Materialbahn (z.B. eine Kunststofffolie) bereitgestellt werden. Die Bereitstellung der Zuluft kann über Düsen und/oder Düsenkästen erfolgen. Ein Düsenkasten verteilt den Luftstrom der Zuluft im Wesentlichen über die Breite der Materialbahn, sodass die Materialbahn möglichst gleichmäßig mit Zuluft überströmt wird.

Ist eine Vielzahl von Luftversorgungseinheiten (zumindest zwei) vorgesehen, können diese von der Abluftrückführeinheit mit einem Teil der Abluft aus dieser ersten Behandlungszone versorgt werden. Zudem sind die Luftversorgungseinheiten in diesem Fall je einer der ersten Behandlungszone vorgelagerten Behandlungszone zugeordnet, um diese mit Zuluft zu versorgen.

Die Behandlungszonen können zumindest eine Kühlzone und/oder zumindest eine Annealingzone umfassen. Insbesondere die Behandlungszone, die hier als erste Behandlungszone bezeichnet ist, kann eine Kühlzone sein, der in einem Aspekt der Erfindung keine weitere Behandlungszone mehr nachfolgt. Die Behandlungszone, die hier als erste Behandlungszone bezeichnet ist kann beispielsweise die letzte Behandlungszone einer Reckanlage sein. Die zweite Behandlungszone kann ebenfalls eine Kühlzone sein.

Die Begriffe "erste" und "zweite" Behandlungszone geben keine Reihenfolge an, in der die Behandlungszonen (z.B. von einer Materialbahn) durchlaufen werden. Sie dienen nur der Unterscheidbarkeit der Behandlungszonen. Tatsächlich wird die zweite Behandlungszone vor der ersten Behandlungszone durchlaufen. Die zweite Behandlungszone ist der ersten Behandlungszone also vorgelagert.

Da der ersten Behandlungszone Frischluft zugeführt wird, und die Abluft anschließend abgeführt wird, kommt in dieser ersten Behandlungszone die zugeführte Frischluft nur einmal mit der ersten Behandlungszone und dem darin enthaltenen Material (beispielsweise eine Materialbahn, wie eine Kunststofffolie) in Kontakt. Die Luft wird in der ersten Behandlungszone also nicht im Kreis geführt. Dies hat zur Folge, dass die aus der ersten Behandlungszone abgeführte Abluft relativ sauber ist (also kein, oder nur sehr wenig Kontaminat enthält) und somit gut in anderen, vorgelagerten Behandlungszonen, Reckzonen und/oder Vorheizzonen weiterverwendet werden kann, ohne dabei die Qualität des zu behandelnden Materials (beispielsweise eine Materialbahn, wie eine Kunststofffolie) negativ zu beeinflussen. Zudem wird die Frischluft in der ersten Behandlungszone bereits vorgewärmt, sodass Energie bei der Temperierung der Zuluft für die entsprechend vorgelagerten Zonen eingespart werden kann.

In einem Aspekt ist Luftversorgungssystem weiterhin dazu eingerichtet, Abluft aus einer zweiten Behandlungszone abzuführen. Die aus der zweiten Behandlungszone abgeführte Abluft kann jedenfalls teilweise (an die Umwelt) abgeführt werden. Bevor Abluft in die Umwelt abgegeben wird, kann diese gefiltert werden, sodass sie im Wesentlichen frei von Schadstoffen ist.

Die Luftversorgungseinheit kann weiterhin dazu eingerichtet sein, jedenfalls einen Teil (0% bis 100%) der aus der zweiten Behandlungszone abgeführten Abluft mit zumindest einem Teil der der Luftversorgungseinheit von der Abluftrückführeinheit zugeführten Abluft zu mischen, um einen gemischten Luftstrom zu generieren. Das Verhältnis von Abluft aus der ersten Behandlungszone zu Abluft aus der zweiten Behandlungszone kann im Wesentlichen 5:1, oder im Wesentlichen 4:1, oder im Wesentlichen 3:1, oder im Wesentlichen 2:1, oder im Wesentlichen 1:1, oder im Wesentlichen 1:2, oder im Wesentlichen 1:3, oder im Wesentlichen 1:4, oder im Wesentlichen 1:5 betragen.

In einem Aspekt kann der gemischte Luftstrom beispielsweise 1/3 Abluft aus der ersten Behandlungszone und 2/3 Abluft aus der zweiten Behandlungszone umfassen.

Insbesondere kann der gemischte Luftstrom so gemischt werden, dass der Anteil an Kontaminat unter einem gewünschten, vordefinierten Grenzwert liegt. Weiterhin kann der gemischte Luftstrom so gemischt werden, dass er eine gewünschte Temperatur hat, oder in einem gewünschten Temperaturbereich liegt. Hierzu können entsprechende Sensoren vorgesehen sein. Über die Mischung des Luftstroms kann insbesondere die Standzeit von Filtern des Luftversorgungssystems, insbesondere der Luftversorgungseinheit, erhöht werden und/oder der Grad der Verschmutzung der einzelnen Behandlungszonen kann reduziert werden.

Schließlich ist die Luftversorgungseinheit dazu eingerichtet den gemischten Luftstrom an die zweite Behandlungszone als Zuluft bereitzustellen. Die Beimischung von Abluft aus der zweiten Behandlungszone erlaubt es die Zuluft zu erwärmen, sodass weitere Energie eingespart werden kann.

Weiterhin kann das Luftversorgungssystem dazu eingerichtet sein, der ersten Behandlungszone als Zuluft ausschließlich Frischluft zuzuführen. Somit kann in der Abluft der ersten Behandlungszone der Grad an Kontaminat sehr gering gehalten werden.

Der Luftstrom der Zuluft zu der ersten, zweiten und/oder jeder weiteren Zone kann beispielsweise so geregelt werden, dass die Kontaminat-Konzentration in der Abluft unter einem vordefinierten Grenzwert liegt.

Zudem kann über den Luftstrom der Zuluft und/oder den Luftstrom der Abluft die Verweildauer der Luft in der jeweiligen Zone bestimmt werden. Je geringer die Verweildauer ist, desto geringer ist die Kontaminat-Konzentration in der Abluft. Überdies kann über den Luftstrom der Zuluft und/oder den Luftstrom der Abluft ein gewünschter Druck (Überdruck, Unterdruck, atmosphärischer Druck) in der jeweiligen Zone eingestellt werden. Über den Luftstrom der Zuluft und/oder den Luftstrom der Abluft kann insbesondere die Standzeit von Filtern des Luftversorgungssystems, insbesondere der Luftversorgungseinheit, erhöht werden und/oder der Grad der Verschmutzung der einzelnen Behandlungszonen kann reduziert werden.

Die Luftversorgungseinheit kann weiterhin dazu eingerichtet sein, der zweiten Behandlungszone als Zuluft ausschließlich den ihr von der Abluftrückführeinheit zugeführten Teil der Abluft, oder einen gemischten Luftstrom, der keine Frischluft umfasst, zuzuführen. Die Zuluft die von der Luftversorgungseinheit an die ihr zugeordnete Behandlungszone abgegeben wird, ist also frei von Frischluft. Dies ermöglicht einen energieeffizienten Betrieb, da keine (kalte) Frischluft erwärmt werden muss. Zugleich ist der Regelungsaufwand im Vergleich zu vorbekannten Systemen gering.

Weiterhin kann die Abluftrückführeinheit dazu eingerichtet sein, die gesamte Abluft aus der ersten Behandlungszone abzuführen. Es bestehen mithin keine weiteren Abluftauslässe und die gesamte erwärmte Frischluft kann als Abluft über die Abluftrückführeinheit andern Zonen als Zuluft bereitgestellt werden.

Insbesondere kann das Luftversorgungssystem zumindest einen regelbaren Ventilator umfassen, wobei der zumindest eine regelbare Ventilator dazu eingerichtet sein kann
- einen Zuluft-Luftstrom der ersten Behandlungszone zu regeln, oder
- einen Zuluft-Luftstrom der zweiten Behandlungszone (oder einer weiteren Behandlungs- oder Reckzone) zu regeln, oder
- einen Abluft-Luftstrom der ersten Behandlungszone zu regeln, oder
- einen Abluft-Luftstrom der zweiten Behandlungszone (oder einer weiteren Behandlungs- oder Reckzone) zu regeln, oder
- einen Luftstrom zu regeln, der von der Abluftrückführeinheit der zumindest einen Luftversorgungseinheit zugeführt wird.

Sollen mehrere, unterschiedliche Luftströme geregelt werden, um z.B. einen gewünschten Druck einzustellen, oder eine Kontaminat-Konzentration in der Behandlungszone gering zu halten, können entsprechend mehrere Ventilatoren vorgesehen sein. Die Ventilatoren können Teil der Luftversorgungseinheit, der Frischluftversorgungseinheit und/oder der Abluftrückführeinheit sein. Zudem kann zumindest ein Ventilator in einer Luftleitung (Zuluft oder Abluft) des Luftversorgungssystems, oder an einer anderen Stelle des Luftversorgungssystems angeordnet sein.

Weiterhin kann das Luftversorgungssystem zumindest ein Heizelement (z.B. ein elektrisches Heizelement, ein Fluid-führendes Heizelement, einen Wärmetauscher und/oder dergleichen) umfassen. Das zumindest eine Heizelement kann beispielsweise dazu eingerichtet sein
- einen Zuluft-Luftstrom der ersten Behandlungszone zu temperieren, oder
- einen Zuluft-Luftstrom der zweiten Behandlungszone (oder jeder weiteren Behandlungs- oder Reckzone) zu temperieren.

Somit kann die Temperatur der Zuluft eingestellt bzw. geregelt werden. Dies erhöht die Fertigungsqualität.

Weiterhin kann die Luftversorgungseinheit eine Kondensatfallenanordnung mit zumindest einem Kondensationselement umfassen.

Die Kondensatfallenanordnung dient dem Abscheiden (bzw. Auskondensieren) von Kontaminat, welches in der Abluft mitgeführt wird.

Hierzu ist die Kondensatfallenanordnung dazu eingerichtet von dem Teil der Abluft durchströmt zu werden, der der Luftversorgungseinheit von der Abluftrückführeinheit zugeführt wird. Dieser Abluftteil weist eine erste Temperatur T1 auf. Zudem wird dieser Abluftteil dazu genutzt das Kondensationselement zu temperieren.

Weiterhin ist die Kondensatfallenanordnung dazu eingerichtet von einem Teil (0% bis 100%) der aus der zweiten Behandlungszone abgeführten Abluft durchströmt zu werden, welcher eine zweite Temperatur T2 aufweist. Die zweite Temperatur T2 ist höher als die erste Temperatur T1.

Aufgrund des Temperaturunterschieds kann das Kondensationselement temperiert werden, sodass Kontaminat, welches von der aus der zweiten Behandlungszone abgeführten Abluft mitgeführt wird, zumindest teilweise an dem zumindest ein Kondensationselement ausfällt (kondensiert).

Bei der Herstellung von Kunststofffolien umfasst das Kontaminat beispielsweise Monomere, Oligomere und/oder andere flüchtige Bestandteile, die aus der (noch warmen) Kunststofffolie entweichen. Dieses Kontaminat setzt sich als sogenanntes "White Powder" in der Reckanlage und/oder dem Luftversorgungssystem ab und kann dieses schädigen. Beispielsweise können Öffnungen verstopft, oder bewegliche Bauteile (wie Luft-Regelungsklappen) schwergängig oder sogar blockiert werden. Zudem ist die Entfernung aufwändig, da hierfür i.d.R. die Reckanlage gestoppt und die Produktion unterbrochen werden muss. Die Kondensationsfallenanordnung erlaubt es nun das Kontaminat gezielt aus dem Luftstrom zu entfernen, bevor es sich absetzt. Somit kann die Lebensdauer der Anlage erhöht und/oder Reinigungsintervalle verlängert werden. Zudem wird durch die Kondensationsfallenanordnung die Standzeit etwaiger Filter deutlich erhöht.

Weiterhin kann die Kondensatfallenanordnung dazu eingerichtet sein, die sie durchströmenden Abluftanteile zu vermischen, um einen gemischten Luftstrom zu generieren. Es hat sich gezeigt, dass hierdurch sehr homogen gemischte Luftströme erreichbar sind. Dies führt zu einer weiteren Steigerung der Produktqualität, insbesondere bei (Folien-)Reckanlagen.

Die Luftversorgungseinheit kann weiterhin eine Grobfilteranordnung umfassen. Die Grobfilteranordnung kann Kontaminat, welches die Kondensatfallenanordnung passieren konnte aus dem Luftstrom filtern. Die Grobfilteranordnung kann also der Kondensatfallenanordnung nachgeschalten sein.

Die Grobfilteranordnung kann einen oder mehrere Grobfilter umfassen, welche beispielsweise ein Metallgestrick, ein Reckblech, ein Streckmetallgitter, ein Drahtgewebe, ein Lochblech, ein Wabenblech, ein Filtervlies und/oder dergleichen umfassen. Der Grobfilter kann wiederverwendbar (und entsprechend reinigbar sein), oder zur einmaligen Verwendung ausgeführt sein.

Zwischen der Kondensatfallenanordnung und der Grobfilteranordnung kann zudem ein Heizelement angeordnet sein. Ebenfalls ist es möglich, ein Heizelement nach der Grobfilteranordnung anzuordnen.

Weiterhin kann die Luftversorgungseinheit eine Filteranordnung umfassen, welche zumindest einen Filter umfasst, der typischerweise feiner ist als der Grobfilter. Somit kann weiteres Kontaminat aus dem Luftstrom entfernt werden, bevor dieser der Behandlungszone als Zuluft zugeleitet wird. Die Filteranordnung ist beispielsweise der Grobfilteranordnung nachgeschalten.

Die Aufgabe wird weiterhin durch eine Reckanlage, insbesondere eine Folienreckanlage gelöst, welche zur Längs- und/oder Querverstreckung einer Materialbahn (z.B. Kunststofffolie) eingerichtet ist. Die Reckanlage umfasst eine Reckzone und zumindest zwei Behandlungszonen. Diese können, wie oben beschrieben beispielsweise Kühlzonen und/oder Annealingzonen sein. Weitere Behandlungszonen sind ebenfalls möglich.

Insbesondere die Behandlungszone, die hier als erste Behandlungszone bezeichnet ist, kann eine Kühlzone sein, der in einem Aspekt der Erfindung keine weitere Behandlungszone mehr nachfolgt. Die zweite Behandlungszone kann ebenfalls eine Kühlzone sein.

Weiterhin umfasst die Reckanlage ein Luftversorgungssystem, wie es vorstehend beschrieben ist.

In einem weiteren Aspekt der Erfindung können eine Vorheizzone, eine Reckzone und/oder zumindest eine Annealingzone der Reckanlage ausschließlich mit Frischluft als Zuluft versorgt werden. Die Frischluft kann über Heizelemente (beispielsweise Wärmetauscher) auf eine gewünschte Temperatur gebracht werden. Die Abluft der Vorheizzone, der Reckzone und/oder der zumindest eine Annealingzone kann an die Umwelt abgeführt und optional gefiltert werden. Dies reduziert den Regelungsaufwand der einzelnen Luftströme, sowie die Kontaminat-Konzentration in der Reckanlage.

### Kurze Beschreibung der Figuren

Die Erfindung wird nachfolgend anhand der beigefügten Figuren beispielhaft näher erläutert. Dabei zeigt
- Figur 1: eine schematische Darstellung einer Reckanlage mit einem Luftversorgungssystem;
- Figur 2: eine schematische Darstellung des Luftversorgungssystems;
- Figur 3: eine schematische Darstellung einer Luftversorgungseinheit;
- Figur 4: eine schematische Darstellung einer Kondensatfallenanordnung, und
- Figur 5: eine schematische Darstellung einer Grobfilteranordnung.

### Beschreibung der Figuren

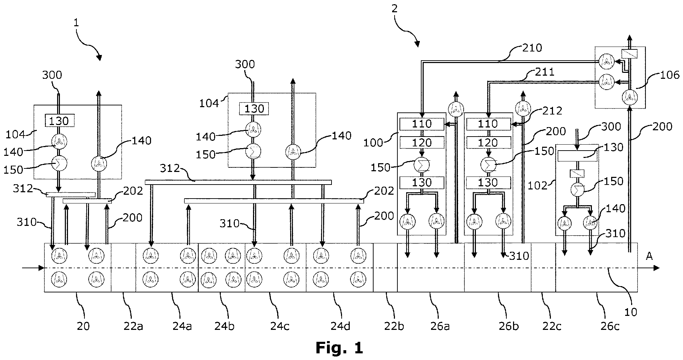

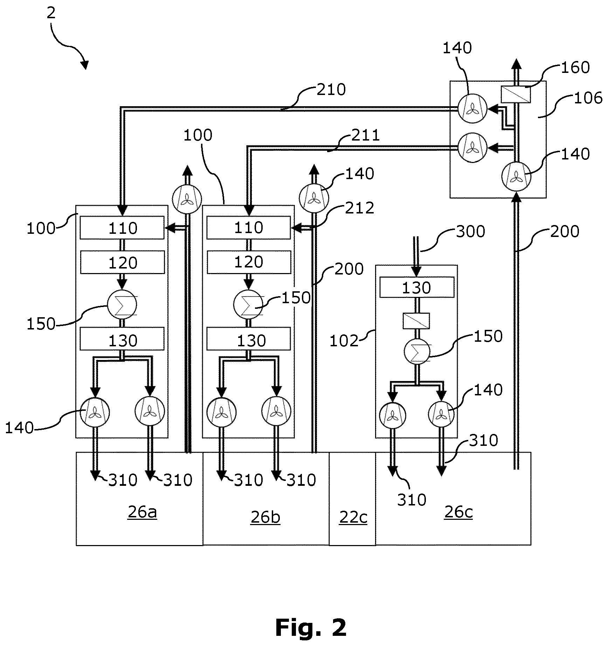

Figur 1 zeigt eine schematische Darstellung einer Reckanlage 1 mit einem Luftversorgungssystem 2. Einige Aspekte des Luftversorgungssystem 2 sind nochmals im Detail in Figur 2 dargestellt.

Die gezeigte Reckanlage ist beispielsweise eine Folienreckanlage 1, die zur Längs- und/oder Querverstreckung von Kunststofffolien 10, beispielsweise PET (Polyethylenterephthalat) dient. Ebenso ist es möglich andere Materialbahnen mit der Reckanlage zu Recken und/oder zu behandeln, wie beispielsweise PP (Polypropylen), PE (Polyethylen), PA (Polyamid), oder andere Kunststoffe. Die Reckanlage dient dazu aus einer (extrudierten) Materialbahn biaxial oder monoaxial orientierte Folien herzustellen.

Bei der Kunststofffolienherstellung wird beispielsweise zunächst ein Schmelzefilm über eine Düse (beispielsweise eine Breitschlitzdüse) auf eine Kühlwalze einer Folienabzugsmaschine extrudiert. Anschließend kann die abgekühlte und zumindest vorverhärtete Schmelze (Materialbahn) von der Folienabzugsmaschine abgezogen werden und der eigentlichen Reckanlage 1 zugeführt werden. Dort erfolgt die Reckung in Längs- und/oder Querrichtung in zumindest einer Reckzone 20, sowie etwaige Nachbehandlungen, wie Annealing, oder Kühlen der gereckten Materialbahn (Kunststofffolie) 10 in entsprechenden Behandlungszonen (Annealingzonen 24a-d und Kühlzonen 26a-26c).

Die Kunststofffolie durchläuft die Reckanlage 1 in einer sogenannten Abzugsrichtung A. Nach dem Durchlaufen der Reckanlage 1 kann die gereckte Kunststofffolie beispielsweise aufgewickelt werden.

Die einzelnen Zonen können durch sogenannte Neutralzonen 22a, 22b, 22c getrennt sein, in denen keine bestimmte Behandlung stattfindet. Insbesondere kann eine Neutralzone 22a, 22b zwischen unterschiedlichen Zonentypen angeordnet sein, beispielsweise zwischen der Reckzone 20 und den Annealingzonen 24a-d, sowie zwischen den Annealingzonen 24a-d und den Kühlzonen 26a, 26b. Hier ist eine weitere Neutralzonen zwischen der Kühlzone 26b und der Kühlzone 26c angeordnet, welche die letzte Zone der Reckanlage ist. Der Kühlzone 26c folgt also keine weitere Behandlungszone mehr nach.

In einer Annealingzone 24a-d kann eine Wärmebehandlung der Kunststofffolie 10, insbesondere nach Beendigung des Reckvorganges in der Reckzone 20, erfolgen. Hierdurch kann beispielsweise eine Relaxierung erzielt werden. Wie in Figur 1 gezeigt ist, können mehrere Annealingzonen 24a-d Teil der Reckanlage sein. Beispielsweise kann die Reckanlage zumindest 5, oder zumindest 7, oder zumindest 9 Annealingzonen umfassen. Die Annealingzonen können unterschiedlich temperiert sein, um eine gewünschte Wärmebehandlung zu erreichen.

In den Kühlzonen 26a, 26b, 26c wird die Kunststofffolie schließlich soweit abgekühlt, dass sie weiterverarbeitet und/oder zur Weiterverarbeitung verpackt (beispielsweise aufgewickelt) werden kann. Sind mehrere Kühlzonen 26a, 26b, 26c vorgesehen, kann die Temperatur in den Kühlzonen in Abzugsrichtung A abnehmen. Dies ermöglicht ein schrittweises, langsames Abkühlen der Kunststofffolie 10.

Die Reckanlage 1, die zumindest eine Annealingzone 24a-d, die zumindest eine Neutralzone 22a-c und/oder die zumindest eine Kühlzone 26a-c beinhaltet, kann eine oder mehrere Luftumwälzeinrichtungen (beispielsweise in Form eines Ventilators) und/oder Heizeinrichtungen umfassen. Diese können über und/oder unter der Kunststofffolie 10 bzw. Materialbahn angeordnet sein (angedeutet durch das Ventilatorsymbol).

Bei der Reckanlage 1 kann es sich grundsätzlich um eine Simultanreckanlage handeln, bei der die Kunststofffolie 10 in der eigentlichen Reckzone 20 simultan, also gleichzeitig in Längs- und Querrichtung gereckt wird. Ebenso kann es sich bei der Reckanlage 1 um eine sequenzielle Reckanlage handeln, bei der die Kunststofffolie 10 beispielsweise erst in Längsrichtung und dann in Querrichtung (oder umgekehrt) gereckt wird. Bei der Reckanlage 1 kann es sich grundsätzlich aber auch um reine Querreckanlage handeln, in welcher die Kunststofffolie 10 quer zur Folienlaufrichtung verstreckt wird.

Zur Be- und Entlüftung der einzelnen Zonen ist ein Luftversorgungssystem 2 vorgesehen.

In der hier gezeigten Ausführungsform ist der Reckzone 20 eine Frischluftversorgungseinheit 104 zugeordnet. Die Reckzone 20 umfasst typischerweise eine Vorheizzone, mittels welcher die zu reckende Materialbahn auf eine gewünschte Temperatur vorgeheizt werden kann. Die Frischluftversorgungseinheit 104 umfasst einen Ventilator, welcher Frischluft über einen Filter 130 ansaugt und an die Reckzone 20 als Zuluft 310 bereitstellt. Die gefilterte Frischluft kann zudem mittels eines Heizelements 150 auf eine gewünschte Temperatur temperiert werden. Im hier gezeigten Beispiel wird die Zuluft 310 über einen Zuluftverteiler 312 an unterschiedlichen Positionen in der Reckzone 20 bereitgestellt. Beispielsweise kann die Zuluft über Düsenkästen, welche unter und/oder über der Kunststofffolie 10 angeordnet sind an die Reckzone 20 breitgestellt werden.

Die Zuluft überstreicht in der Reckzone 20 die Kunststofffolie und nimmt dabei Kontaminat (insbesondere Oligomere) auf. Die kontaminierte Luft kann als Abluft mittels eines weiteren Ventilators 140 aus der Reckzone abgeführt werden. Insbesondere kann die Abluft an unterschiedlichen Positionen aus der Reckzone entnommen werden und über einen Abluftsammler 202 mittels des Ventilators angesaugt werden. Diese Be- und Entlüftung der Reckzone 20 zeichnet sich durch eine einfache Ansteuerbarkeit bzw. Regelbarkeit aus. In einem Aspekt kann zur Regelung des Luftstroms auf störanfällige regelbare Klappen, insbesondere Jalousieklappen verzichtet werden.

Den Annealingzonen 24a-24d ist ebenfalls eine Frischluftversorgungseinheit 104 zugeordnet, welche ähnlich aufgebaut ist, wie die Frischluftversorgungseinheit, welche der Reckzone 20 (bzw. Vorheiz- und Reckzone) zugeordnet ist. Entsprechend umfasst die Frischluftversorgungseinheit 104 der Annealingzonen 24a-24d einen Ventilator, welcher Frischluft über einen Filter 130 ansaugt und den Annealingzonen 24a-24d als Zuluft 310 bereitstellt. Die gefilterte Frischluft kann zudem mittels eines Heizelements 150auf eine gewünschte Temperatur temperiert werden. Im hier gezeigten Beispiel wird die Zuluft 310 über einen Zuluftverteiler 312 an unterschiedlichen Positionen in den Annealingzonen 24a-24d bzw. an unterschiedliche Annealingzonen 24a-24d bereitgestellt. Es versteht sich, dass auch mehrere Frischluftversorgungseinheiten vorgesehen sein können, um die Annealingzonen 24a-24d zu be- bzw. entlüften.

Die Zuluft überstreicht in den Annealingzonen 24a-24d die Kunststofffolie und nimmt dabei Kontaminat (insbesondere Oligomere) auf. Die kontaminierte Luft kann als Abluft mittels eines weiteren Ventilators 140 aus den Annealingzonen 24a-24d abgeführt werden. Insbesondere kann die Abluft an unterschiedlichen Positionen aus den Annealingzonen 24a-24d entnommen werden und über einen Abluftsammler 202 mittels des Ventilators 140 angesaugt werden. Diese Be- und Entlüftung der Annealingzonen 24a-24d 20 zeichnet sich durch eine einfache Ansteuerbarkeit bzw. Regelbarkeit aus.

Die Be- und Entlüftung der Kühlzonen 26a, 26b und 26c ist im Detail in Figur 2 gezeigt und nachstehend beschrieben. Die Neutralzonen können optional ebenfalls be- bzw. entlüftet werden. Ebenso ist es möglich, dass in den Neutralzonen kein geregelter Luftaustausch stattfindet.

Figur 2 zeigt eine schematische Darstellung des Luftversorgungssystems 2, welches die Kühlzonen 26a, 26b und 26c mit Zuluft versorgt (belüftet) und Abluft abführt (entlüftet).

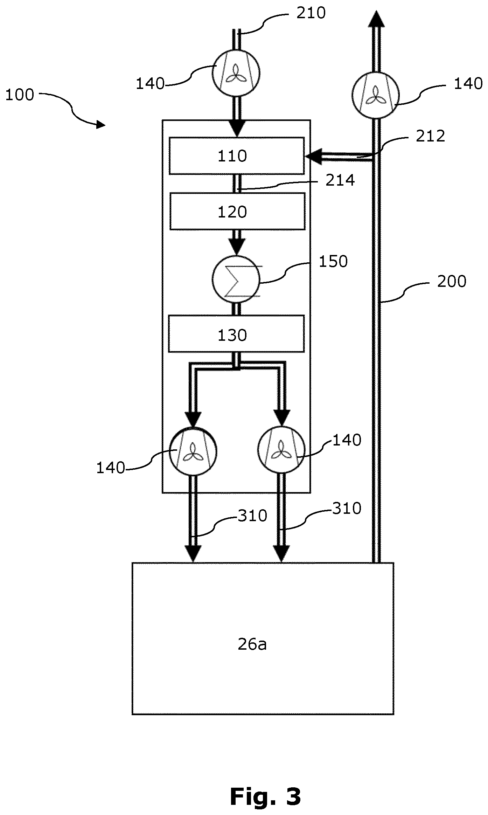

Das Luftversorgungssystem 2 umfasst zumindest eine Luftversorgungseinheit 100 (im gezeigten, exemplarischen Ausführungsbeispiel sind es zwei). Die Luftversorgungseinheiten 100 sind der Kühlzone 26a bzw. der Kühlzone 26b zugeordnet und versorgen diese mit Zuluft 310. Der Luftstrom der Zuluft 310 kann über separate Ventilatoren 140 gesteuert bzw. geregelt werden. Der Aufbau der Luftversorgungseinheit 100 ist im Detail in Figur 3 gezeigt und mit Verweis auf diese beschrieben.

Weiterhin umfasst das Luftversorgungssystem 2 eine Frischluftversorgungseinheit 102. Diese ist der Kühlzone 26c zugeordnet. Die Frischluftversorgungseinheit 102 führt der Kühlzone 26c Frischluft 300 als Zuluft 310 zu. Die Frischluftversorgungseinheit 102 umfasst einen Ventilator, welcher Frischluft über einen Filter 130 ansaugt und an die Kühlzone 26c als Zuluft 310 bereitstellt. Die gefilterte Frischluft kann zudem mittels eines Heizelements 150 auf eine gewünschte Temperatur temperiert werden. Im hier gezeigten Beispiel wird die Zuluft 310 über zwei weitere regelbare Ventilatoren 140 an die Kühlzone 26c bereitgestellt. Die Zuluft der Kühlzone 26c besteht vorzugsweise ausschließlich aus Frischluft.

Die Zuluft überstreicht die Kunststofffolie in der Kühlzone 26c, nimmt etwaiges noch vorhandenes Kontaminat auf, und wird als Abluft 200 von einer Abluftrückführeinheit 106 angesaugt. Die Abluftrückführeinheit 106 umfasst beispielsweise einen Ventilator, über den der Luftstrom der Abluft steuer- bzw. regelbar ist. In der Abluftrückführeinheit 106 kann der Abluftstrom aufgeteilt werden in einen Teil 210 und einen Teil 211. Dies kann über entsprechend steuer- bzw. regelbare Ventilatoren erfolgen. Ebenso ist es möglich steuerbare Ventile und/oder Klappen 160 vorzusehen, um den Luftstrom zu steuern bzw. zu regeln. Zudem können Rückstromklappen vorgesehen sein, die ein unerwünschtes Rückströmen von Zu- und/oder Abluft verhindern.

Die Teile 210 und 211 der aus der Kühlzone 26c entnommenen Abluft können den Luftversorgungseinheiten 100 zugeführt werden. Ein weiterer Teil kann auch an die Umwelt abgegeben werden. Die Abluftrückführeinheit 106 kann so eingerichtet sein, dass sie ein Verhältnis der Teile 210, 211 einstellen bzw. regeln kann. Beispielsweise können 40% der aus der Kühlzone 26c abgeführten Abluft als Teil 210 der Luftversorgungseinheit 100 zugeführt, die der Kühlzone 26a zugeordnet ist. Zudem können 55% der aus der Kühlzone 26c abgeführten Abluft als Teil 211 der Luftversorgungseinheit 100 zugeführt, die der Kühlzone 26b zugeordnet ist. Die verbleibenden 5% können an die Umwelt abgegeben werden. Dieses Verhältnis ist typischerweise nicht fixiert, sondern frei einstellbar.

In der Luftversorgungseinheit 100 wird der Teil 210, 211 der aus der Kühlzone 26c abgeführten Abluft zunächst in eine Kondensatfallenanordnung 110 geleitet (s. Fig. 3). Zudem wird der Kondensatfallenanordnung 110 zumindest ein Teil 212 der Abluft zugeführt, die aus der Kühlzone 26a, 26b entnommen wurde, der die Luftversorgungseinheit 100 zugeordnet ist.

Zum Abführen von Abluft 200 und zum Aufteilen der Abluft in den Teil 212 kann zumindest ein (regelbarer) Ventilator 140 und/oder zumindest ein regelbares Ventil oder zumindest eine Klappe vorgesehen sein.

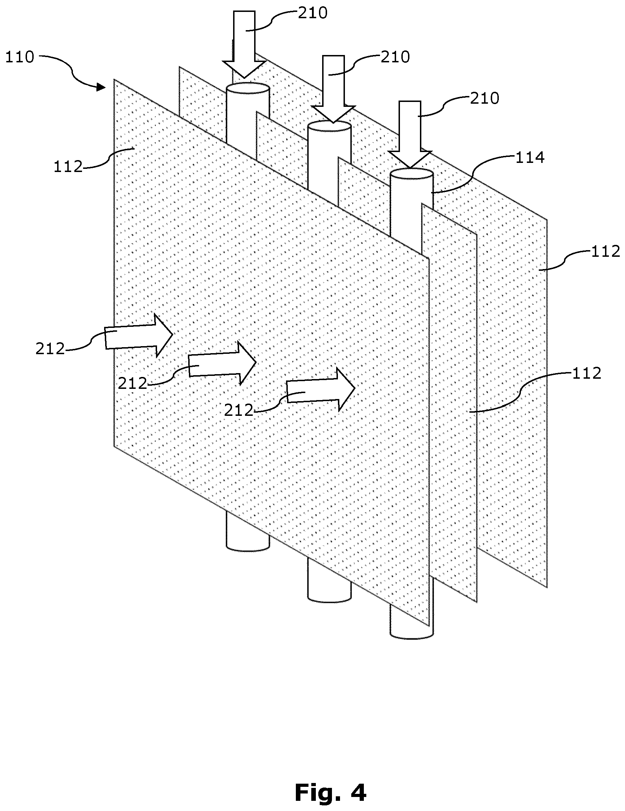

In der Kondensatfallenanordnung 110 kann Kontaminat, insbesondere aus dem Abluftteil 212, abgeschieden bzw. kondensiert werden. Zudem kann ein gemischter Luftstrom 214, der die Teile 210 bzw. 211 und 212 umfasst generiert werden. Die Funktionsweise der Kondensatfallenanordnung 110 ist mit Bezug auf Figur 4 näher erläutert.

Die Luftversorgungseinheit 100 kann insbesondere so ausgestaltet sein, dass der zugeordneten Behandlungszone (hier Kühlzone 26a bzw. 26b) keine Frischluft zugeführt wird, sondern ausschließlich Abluft, die aus der nachfolgenden bzw. letzten Behandlungs- bzw. Kühlzone 26c entnommen wurde, sowie rückgeführte Abluft aus der zugeordneten Behandlungszone.

Nach dem Passieren der Kondensatfallenanordnung 110 kann der gemischte Luftstrom über eine Grobfilteranordnung 120 und eine Filteranordnung 130 geleitet werden. Die Kondensatfallenanordnung verhindert, dass die Filter schnell zusetzen bzw. oft getauscht werden müssen. Zudem kann ein Heizelement 150 vorgesehen sein, um den gemischten Luftstrom 214 zu temperieren. Das Heizelement 150 kann, wie gezeigt, zwischen der Grobfilteranordnung 120 und der Filteranordnung 130 angeordnet sein. Ebenso ist es möglich, das Heizelement 150 der Grobfilteranordnung 120 vorzuschalten, oder der Filteranordnung 130 nachzuschalten.

Beispielsweise über Ventilatoren 140 kann der gemischte und gegebenenfalls temperierte Luftstrom 214 der zugeordneten Behandlungszone als Zuluft bereitgestellt werden.

In Figur 4 ist die Funktionsweise einer exemplarischen Kondensatfallenanordnung 110 gezeigt. Die Kondensatfallenanordnung 110 umfasst zumindest ein Kondensationselement 112. Das Kondensationselement 112 ist ein Bauteil mit großer Oberfläche, an welchem das Kontaminat (insbesondere Oligomere) ausfällt bzw. kondensiert. Durch das Ausfallen des Kontaminats sinkt die relative Kontamination in der Prozessluft. Die Kondensatfallenanordnung ist vorzugsweise so gestaltet, dass Sie leicht reinigbar ist. Somit ist die weitergeführte Luft deutlich sauberer.

Insbesondere wird der Teil 210, 211 der Abluft, der der Luftversorgungseinheit 100 von der Abluftrückführeinheit 106 zugeführt wird, so durch die Kondensatfallenanordnung 110 geleitet, dass das Kondensationselement 112 auf eine Temperatur temperiert wird, die unter einer Kondensationstemperatur des Kontaminats liegt. Der Teil 210, 211 der Abluft, der der Luftversorgungseinheit 100 von der Abluftrückführeinheit 106 zugeführt wird kann hierfür eine erste Temperatur T1 aufweisen bzw. entsprechend temperiert sein. In dem gezeigten Beispiel wird der Teil 210 durch Röhren geleitet, die so an das Kondensationselement 112 gekoppelt sind, dass Wärme übertragen werden kann.

Der Teil 212 der Abluft, der aus der zugeordneten Behandlungszone (hier Kühlzone 26a bzw. 26b) abgeführten wurde, wird an das temperierte Kondensationselement 112 geleitet. Dabei kommt es zur Kondensation des Kontaminats.

Die hier gezeigte Ausführung der Kondensatfallenanordnung 110 ist nur exemplarisch und es können andere Kondensatfallenanordnungen 110 ebenfalls Verwendung finden.

Zur Reinigung der Kondensatfallenanordnung 110 und zur Entfernung des Kondensats, kann das bzw. die Kondensationselemente 112 entfernt und ausgetauscht werden, oder abgereinigt werden.

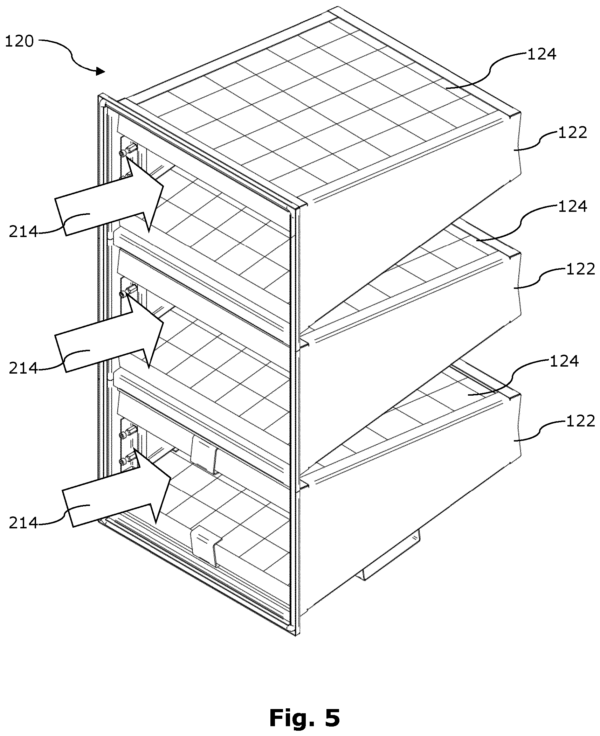

Figur 5 zeigt eine schematische Darstellung einer Grobfilteranordnung 120. Die Grobfilteranordnung 120 wird von dem gemischten Luftstrom 214 durchströmt. Die Grobfilteranordnung 120 umfasst eine Vielzahl von Grobfiltern 124 (beispielsweise ein Metallgestrick, ein Reckblech, ein Streckmetallgitter, ein Drahtgewebe, ein Lochblech, ein Wabenblech, ein Filtervlies und/oder dergleichen), welche in einen entsprechenden Filterrahmen 122 eingelegt wurden. Die Grobfilter 124 können wiederverwendbar sein, oder nach dem Gebrauch ausgetauscht werden.

### Bezugszeichenliste

- 1: Folienreckanlage
- 2: Luftversorgungssystem
- 10: Materialbahn (z.B. Kunststofffolie)
- 20: Reckzone (insbesondere mit Vorheizzone)
- 22a: Neutralzone
- 22b: Neutralzone
- 22c: Neutralzone
- 24a: Annealingzone
- 24b: Annealingzone
- 24c: Annealingzone
- 24d: Annealingzone
- 26a: Kühlzone
- 26b: Kühlzone
- 26c: Kühlzone
- 100: Luftversorgungseinheit
- 102: Frischluftversorgungseinheit
- 104: Frischluftversorgungseinheit
- 106: Abluftrückführeinheit
- 110: Kondensatfallenanordnung
- 112: Luftdurchlässiges Element (Lochblech)
- 114: Luftleitung
- 120: Grobfilteranordnung
- 122: Filterrahmen
- 124: Grobfilter
- 130: Filteranordnung
- 140: Ventilator
- 150: Heizelement
- 160: Klappe (Rückstromklappe)
- 200: Abluft
- 202: Abluftsammler
- 210: Rückgeführte Abluft (T1)
- 212: Rückgeführte Abluft (T2 > T1)
- 214: gemischter Luftstrom
- 300: Frischluft
- 310: Zuluft
- 312: Zuluftverteiler
- A: Abzugsrichtung

## Patentansprüche

1. Luftversorgungssystem (2) für eine Reckanlage (1), insbesondere eine Folienreckanlage, das Luftversorgungssystem (2) umfassend:
zumindest eine Luftversorgungseinheit (100);
zumindest eine Frischluftversorgungseinheit (102), und
zumindest eine Abluftrückführeinheit (106), wobei
die Abluftrückführeinheit (106) und die Frischluftversorgungseinheit (102) einer gemeinsamen ersten Behandlungszone (26c) zugeordnet sind, wobei
die Frischluftversorgungseinheit (102) dazu eingerichtet ist, der ersten Behandlungszone (26c) Frischluft (300) als Zuluft (310) zuzuführen, und wobei die
Abluftrückführeinheit (106) dazu eingerichtet ist, Abluft (200) aus der ersten Behandlungszone (26c) abzuführen und jedenfalls einen Teil (210, 211) der Abluft (200) zumindest einer Luftversorgungseinheit (100) zuzuführen, wobei
die Luftversorgungseinheit (100) einer zweiten Behandlungszone zugeordnet ist, welche zweite Behandlungszone (26a, 26b) der ersten Behandlungszone (26c) vorgelagert ist, und wobei die Luftversorgungseinheit (100) dazu eingerichtet ist,
den ihr von der Abluftrückführeinheit (106) zugeführten Teil (210, 211) der Abluft an die zweite Behandlungszone (26a, 26b) als Zuluft (310) bereitzustellen.

2. Das Luftversorgungssystem (2) nach Anspruch 1, wobei das Luftversorgungssystem weiterhin dazu eingerichtet ist, Abluft (200) aus einer zweiten Behandlungszone (26a, 26b) abzuführen, und wobei
die Luftversorgungseinheit (100) weiterhin dazu eingerichtet ist, jedenfalls einen Teil (212) der aus der zweiten Behandlungszone (26b) abgeführten Abluft (212) mit zumindest einem Teil (210, 211) der der Luftversorgungseinheit (100) von der Abluftrückführeinheit (106) zugeführten Abluft zu mischen, um einen gemischten Luftstrom (214) zu generieren, und den gemischten Luftstrom (214) an die zweite Behandlungszone (26a, 26b) als Zuluft (310) bereitzustellen.

3. Luftversorgungssystem (2) nach Anspruch 1 oder 2, wobei das Luftversorgungssystem (2) dazu eingerichtet ist, der ersten Behandlungszone (26c) als Zuluft (310) ausschließlich Frischluft (300) zuzuführen.

4. Luftversorgungssystem (2) nach einem der Ansprüche 1 bis 3, wobei die Luftversorgungseinheit (100) dazu eingerichtet ist, der zweiten Behandlungszone (26a, 26b) als Zuluft (310)
ausschließlich den ihr von der Abluftrückführeinheit (106) zugeführten Teil (210, 211) der Abluft, oder
einen gemischten Luftstrom (214), der keine Frischluft umfasst, zuzuführen.

5. Luftversorgungssystem (2) nach einem der Ansprüche 1 bis 4, wobei Abluftrückführeinheit (106) dazu eingerichtet ist die gesamte Abluft (200) aus der ersten Behandlungszone (26c) abzuführen.

6. Luftversorgungssystem (2) nach einem der Ansprüche 1 bis 5, wobei das Luftversorgungssystem (2) zumindest einen regelbaren Ventilator (140) umfasst, wobei der zumindest eine regelbare Ventilator (140) dazu eingerichtet ist
- einen Zuluft-Luftstrom der ersten Behandlungszone (26c) zu regeln, oder
- einen Zuluft-Luftstrom der zweiten Behandlungszone (26a, 26b) zu regeln, oder
- einen Abluft-Luftstrom der ersten Behandlungszone (26c) zu regeln, oder
- einen Abluft-Luftstrom der zweiten Behandlungszone (26a, 26b) zu regeln, oder
- einen Luftstrom zu regeln, der von der Abluftrückführeinheit (106) der zumindest einen Luftversorgungseinheit (100) zugeführt wird.

7. Luftversorgungssystem (2) nach einem der Ansprüche 1 bis 6, wobei das Luftversorgungssystem (2) zumindest ein Heizelement (150) umfasst, und wobei das zumindest eine Heizelement (160) dazu eingerichtet ist,
- einen Zuluft-Luftstrom der ersten Behandlungszone (26c) zu temperieren, oder
- einen Zuluft-Luftstrom der zweiten Behandlungszone (26a, 26b) zu temperieren.

8. Luftversorgungssystem (2) nach einem der Ansprüche 1 bis 7, wobei die Luftversorgungseinheit (100) eine Kondensatfallenanordnung (110) mit zumindest einem Kondensationselement (112) umfasst, wobei die Kondensatfallenanordnung (110) dazu eingerichtet ist,
von dem Teil (210, 211) der Abluft durchströmt zu werden, der der Luftversorgungseinheit (100) von der Abluftrückführeinheit (106) zugeführt wird, welcher eine erste Temperatur (T1) aufweist, um das Kondensationselement (112) zu temperieren; wobei die Kondensatfallenanordnung (110) weiterhin dazu eingerichtet ist
von einem Teil (212) der aus der zweiten Behandlungszone (26b) abgeführten Abluft (212) durchströmt zu werden, welcher eine zweite Temperatur (T2) aufweist, wobei die zweite Temperatur (T2) höher ist als die erste Temperatur (T1), und wobei das zumindest eine temperierte Kondensationselement (112) so eingerichtet ist, dass
Kontaminat, welches von der aus der zweiten Behandlungszone (26b) abgeführten Abluft (212) mitgeführt wird, zumindest teilweise an dem zumindest ein Kondensationselement (112) kondensiert.

9. Luftversorgungssystem (2) nach Anspruch 8, wobei die Kondensatfallenanordnung (110) weiterhin dazu eingerichtet die sie durchströmenden Abluftanteile (210, 211, 212) zu vermischen, um einen gemischten Luftstrom zu generieren.

10. Luftversorgungssystem (2) nach einem der Ansprüche 8 oder 9, wobei das Kondensationselement (112) ein Lochblech, oder eine Wabenstruktur umfasst.

11. Luftversorgungssystem (2) nach einem der Ansprüche 1 bis 10, wobei die Luftversorgungseinheit (100) weiterhin eine Grobfilteranordnung (120) umfasst, die optional der Kondensatfallenanordnung (110) nachgeschalten ist.

12. Luftversorgungssystem (2) nach einem der Ansprüche 1 bis 11, wobei die Luftversorgungseinheit (100) weiterhin eine Filteranordnung (130) umfasst, die optional der Grobfilteranordnung (120) nachgeschalten ist.

13. Luftversorgungssystem (2) nach einem der Ansprüche 1 bis 12, wobei das Luftversorgungssystem (2) eine Vielzahl von Luftversorgungseinheiten (100) umfasst, wobei die Abluftrückführeinheit (106) dazu eingerichtet ist Abluft (200) aus der ersten Behandlungszone (26c) abzuführen und jedenfalls einen Teil (210, 212) der Abluft (200) den Luftversorgungseinheiten (100) zuzuführen, wobei
die Luftversorgungseinheiten (100) je einer der ersten Behandlungszone vorgelagerten Behandlungszone zugeordnet sind, um diese mit Zuluft (310) zu versorgen.

14. Reckanlage (1), insbesondere Folienreckanlage (1) zur längs und/oder Querverstreckung einer Kunststofffolie (10), wobei die Reckanlage (1)
eine Reckzone (20);
zumindest zwei Behandlungszonen (24a-d, 261-c), welche der Reckzone (20) nachfolgend angeordnet sind, und
ein Luftversorgungssystem (2) nach einem der Ansprüche 1 bis 13 aufweist.

15. Reckanlage (1) nach Anspruch 14, wobei die zumindest zwei Behandlungszonen (24a-d, 261-c) zumindest eine Kühlzone (26a-c) und/oder zumindest eine Annealingzone (24a-d) umfassen, und wobei die erste Behandlungszone (26c) optional eine Behandlungszone ist, der keine weitere Behandlungszone nachfolgt.
